# EUROPEAN PATENT SPECIFICATION

(11) **EP 1 514 971 B1**
(45) Date of publication and mention of the grant of the patent: **10.08.2011**
(21) Application number: 04021675.6
(22) Date of filing: 13.09.2004
(51) Int. Cl.: E03F 5/04

(54) **Holder for gully filter**
Halter für Gullyfilter
Support pour un filtre dans une bouche d'égout

(30) Priority: 11.09.2003 SE 0302445
(43) Date of publication of application: 16.03.2005
(73) Proprietor: Flexiclean AB, 164 40 Kista (SE)
(72) Inventor: Eneroth, Leif, 722 23 Västerås (SE)
(74) Representative: Hopfgarten, Nils

(56) References cited:
- CA-A- 2 296 034
- US-A1- 2002 130 083
- US-B1- 6 231 758

## Description

### Technical Field

The present invention relates to a holder for gully filter. The filter holder comprises an outer part and an inner part, which is arranged inside the outer part. The inner part is arranged to hold a filter.

### Background of the Invention

Filtering of surface water is an important part of the way of the water through our society. Greater and greater demands are made on purification of the surface water before the water reaches the recipient, which may be a lake or a river. For surface water, it becomes increasingly common with filters directly in the surface-water gully. This is particularly important in surface-water gullies placed in exposed environments such as parking places and filling stations.

In order for a filter in a surface-water gully to be efficient, it is required that the filter is replaced at regular intervals before mechanical, and also chemical, clogging is a fact. The replacement interval is determined by the load that the filter in question is subjected to and is accordingly more frequent in an exposed environment. The continuous work with replacing clogged filters occupies a considerable labour input counted in time as a major Swedish town has more than 10 000 surface-water gullies. Since the development is going in the direction that more and more surface-water gullies are provided with filters, a time saving upon replacement of the filters is accordingly of significant importance regarding costs and man-hours.

CA-A-2296034 discloses a holder for a gully filter, which holder comprises a basket support installed in a sewer pipe. A basket with a filter screen rests on and within the basket support and has a handle for removal of the filled basket. The basket support includes a circular flat strip that is extendable to fit into the sewer pipe. The flat strip forces the basket support against the sewer wall so as to keep the basket support with sealing abutment against the entire wall. Furthermore with today's folder, it is frequently difficult, or impossible, to see if the filter is mechanically clogged or not without taking up the entire basket with the filter screen from the gully. Therefore, an expected replacement may result in the lifting of a heavy basket with the filter screen only to find out that the filter not yet needs to be replaced and has, therefore, to be put back in place into the gully.

Surface-water gullies are emptied regularly in order to be cleaned from sand and gravel collected in the lowermost part of the gully. Upon sludge removal, it may frequently be a problem to find room for the sludge-removal hose when a traditional holder with filter is mounted in the gully. Frequently, it is required that the holder is lifted up from the gully for sludge removal being possible to be carried out at all. Since the intervals for sludge removal and filter replacement rarely coincide, this results in many lifts of the heavy filter holders.

Another problem with surface-water gullies is that occasionally ice plugs may be formed in the outlet pipes. In order to break up these, steam is brought down into the gully and the outlet pipe from above. It is difficult to find room also for this equipment when a traditional filter holder, is mounted in place in the gully and it is frequently required that the filter holder is dismounted from the gully before this work can be begun.

### Object of the Invention

The object of the present invention is to provide an improved filter holder for use in a gully, which filter holder solves the above-mentioned problems. The filter holder in question enables that the filter is replaced in an easy and fast way. The construction of the filter holder enables visual inspection of the degree of clogging of the filter without the holder having to be lifted up from the gully, and that equipment for, among other things, sludge removal and supply of steam can be inserted into the gully with the filter holder mounted therein. An additional object of the present invention is to provide good connection between the filter holder and the wall of the gully.

### Summary of the Invention

The object above is attained by the present invention such as this is defined in the independent claim 1. Suitable embodiments of the invention are defined in the dependent claims.

In accordance with the invention, the advantage is obtained that the filter holder, because said support means being arranged between the holder and said opposite inner side of said gully's inner wall, can be formed to only abut sealingly against a part of the inner wall of a gully. This ensures that a spack is provided between the holder the and said opposite inner side of said gully's inner wall which allows to visually inspect the degree of clogging of the filter, and sludge removal can be carried out without the filter holder needing to be moved from the position thereof. In this way, the advantage is obtained that the number of lifts of the filter holder upon such occasions is considerably decreased. The passage that has been provided between the filter holder and the gully's opposite side of said gully's inner wall furthermore ensures that the amount of water that has flowed into the gully not entirely is received in the holder, which entails that the holder upon a possible filter replacement is considerably lighter to lift out of the gully than previously known filter holders. According to an alternative, the filter holder can be arranged to only occupy a part, preferably 30-70 %, and preferably max 50 %, of the horizontal cross-sectional area of a gully, The same holder may, e.g., be manufactured from some plastic material or stainless steel.

In the folded-out position, the support means is arranged to support the filter holder against the wall in a gully.

According to an advantageous embodiment, said support means is telescopically formed and can be locked in the desired position by means of a screw. The advantage is that the length of the support means can be adapted according to the design of the gully, and said support means can thereby be arranged to provide a pressing force against the filter holder. The length of the support means can of course also be adapted to the design of the gully by it being cut off to a suitable length. According to an alternative, the support means may comprise at least one spring element in order to provide said pressing force against the filter holder. According to an additional alternative, the filter holder may comprise a wedge that provides said pressing force against the filter holder.

According to yet an advantageous embodiment, said support means may be provided with wheels for facilitating mounting and dismounting of the filter holder in a gully.

According to an additional preferred embodiment, the filter holder comprises an additional turnable support means. This is particularly advantageous in some older gullies where joints between parts may be present in the depth of the gully. When the parts frequently are somewhat displaced in relation to each other, this means that the wall of the gully is displaced laterally at the joints. By providing the filter holder with two vertically displaced support means, a stable location of the filter is obtained also in case the wall of the gully has irregularities.

According to yet an advantageous embodiment, the outer part of the filter holder may comprise guides in order to be able to displaceably connect the inner part to the outer part, wherein the inner part easily can be mounted into the outer part and held in place therein.

The upper part upon mounting into a gully can be arranged to constitute a fall protection member. Alternativelly, a clamp unit may be arranged at the upper part of the filter holder in order to be able to adapt the size of the fall protection member to the size of the cross-sectional area of the gully.

According to another advantageous embodiment, said inner part comprises a handle in order to facilitate taking out of the inner part from the outer part upon a filter replacement. Said inner part may comprise a first and a second half, which are arranged to be able to assume an open position and a closed position in relation to each other for enabling the filter replacement.

According to yet an advantageous embodiment, a support leg is arranged between the lower part of the outer part and the bottom of the gully so that said outer part of the holder should not stand on the bottom of the gully. This means that the filter is not clogged equally fast as in the case when the filter stands directly on the bottom of the gully. According to an alternative, said support leg may be telescopically formed and the length thereof can be locked in desired posilion by means of a screw. The length of the support leg may of course also be adapted to the desired distance between holder and gully bottom by it being cut off to a suitable length.

### Brief Description of the Drawings

The invention will now be described more closely by means of embodiment examples and reference being made to the accompanying drawings, where
Fig. 1 shows a view from the front of an embodiment of the filter holder according to the present invention,
Fig. 2 shows a top view of an embodiment of the filter holder having a clamp unit according to the present invention.
Fig. 3 shows a section view C-C according to Fig. 1 of an embodiment of the filter holder with the support means folded-out and the holder comprising the filter.
Fig. 4 shows a side view of an embodiment of the filter holder according to the present invention.

### Detailed Description of the Drawings

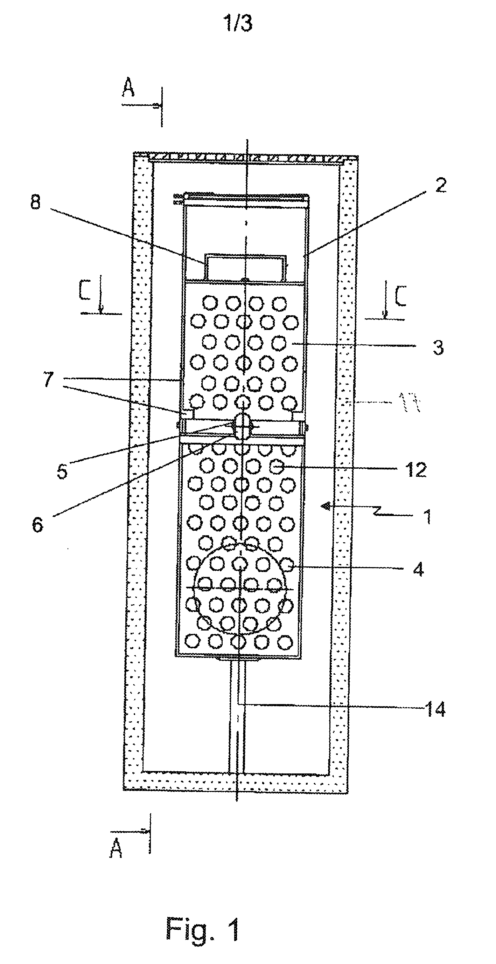

In figures 1-4, an embodiment of the present invention is shown, applied to a holder intended for filters in gullies.

The filter holder 1 in the figures comprises an outer part 2, which detachably connects an inner part 3 by means of guides 7, the inner part 3 holding a filter 12 and comprises at least partly perforations 4 along the limiting surface thereof for enabling filtering of the water of a gully 17 between the inlet 15 and outlet 16 of the gully 17. At the outer part 2, a turnable support means 5 is attached. Upon mounting into a gully 17, the support means 5 is folded out perpendicularly to the filter holder 1 and thereby supports the filter holder 1 against the inside of a gully17. The support means 5 is provided with a wheel 6, which assists upon mounting and dismounting of the filter holder 1 in the gully 17. Furthermore, a handle 8 is arranged at the inner part 3 to assist upon filter replacements when the inner part 3 should be lifted out from the outer part 2. Thus, the filter holder 1 in its entirety never needs to be lifted out from the gully 17 upon filter replacement.

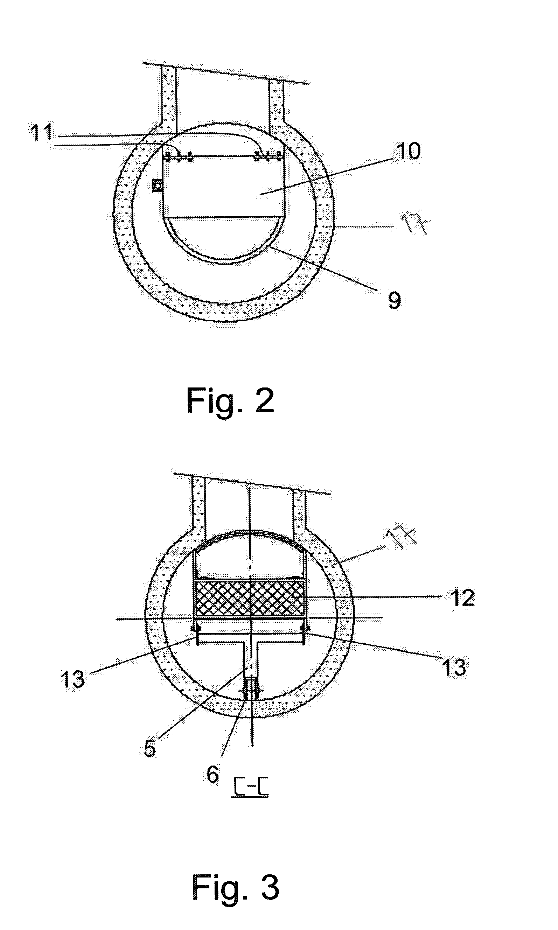

Furthermore, the filter holder 1 comprises a clamp unit 9, intended to work as an extended fall protection member, arranged at the upper part of the filter holder 1. When the filter 12 should be replaced, the upper part of the filter holder 1 is opened, in figure 2 shown as a gap 10 having hinges 11 in the lowered position thereof, and then the inner part 3 is lifted out from the outer part 2. The filter 12 inside the inner part 3 is then replaced and the inner part 3 is again pushed down into the outer part 2.

In figure 3, a section view C-C of the holder 1 according to figure 1 is shown. The filter holder1 is shown straight from above and the inner part 3, comprising the filter 12, is here in a pushed-down position in the outer part 2. In order to provide a pressing force against the filter holder 1, the support means 5 comprises two spring elements 13 arranged between the outer part 2 and said support means 5.

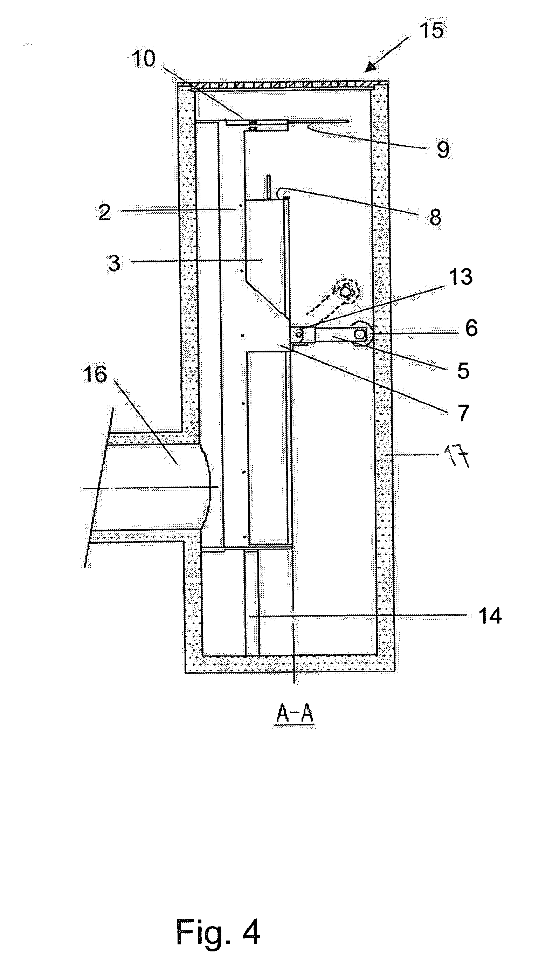

As is seen in figure 4, the filter holder 1 according to the present invention occupies only a part of the cross-sectional area of a gully 17. Thereby, passage down into the gully 17 of, for instance, a sludge-removal hose or equipment for steaming away possible ice plugs is allowed. In figure 4, there is also shown how the support means 5 is turned out from the filter holder 1 and how the support means 5 in the folded-out position thereof assumes a perpendicular position to the filter holder 1. The folded-out position of the support means 5 is also illustrated in figure 1.

In order for the filter 12 not to be clogged equally fast as when the filter 12 is arranged directly against the bottom of a gully17, a support leg 14 is arranged at the lower part of the outer part 2 and the bottom of the gully17. A space is thereby formed between the lower part of the outer part 2 and the bottom of the gully 17, which means an extended space for accumulation of sludge and gravel. Said support leg 14 is also illustrated in figure 1.

## Claims

1. Holder (1) for gully filter comprising an outer part (2) and an inner part (3), with the inner part (3) being detachably connected to the outer part (2) and said inner part (3) being provided with a filter (12), **characterized in that** at least one support means (5) is turnable arranged at the outer part (2) of the holder (1) which support means (5) projects out from the outer part (2) for achieving that the holder (1) is kept in place with sealing abutment against a part of the inner wall of a gully (17)

2. Holder for gully filter according to any one of the preceding claims, **characterized in that** at least one of said support means (5) is telescopically formed and can be locked in the desired position by means of a screw.

3. Holder for gully filter according to any one of the preceding claims, **characterized in that** at least one of said support means (5) is provided with wheels (6).

4. Holder for gully filter according to any one of the preceding claims, **characterized in that** at least one of said support means (5) comprises at least one spring element (13) that provides a pressing force against the holder (1).

5. Holder for gully filter according to any one of the preceding claims, **characterized in that** the holder (1) comprises a wedge that is arranged to be placed between at least one of said support means (5) and said opposite inner side of said gully's (17) inner wall, providing said pressing force against the holder (1).

6. Holder for gully filter according to any one of the preceding claims, **characterized in that** it comprises at least two support means (5) that are arranged vertically displaced in relation to each other.

7. Holder for gully filter according to any one of the preceding claims, **characterized in that** the outer part (2) comprises guides (7) for displaceable connection of the inner part (3) to the outer part (2).

8. Holder for gully filter according to any one of the preceding claims, **characterized in that** said inner part (3) comprises a handle (8) for enabling a complete release of the inner part (3) from the outer part (2) without the outer part (2) needing to be taken out from the gully (17).

9. Holder for gully filter according to any one of the preceding claims, **characterized in that** a support leg (14) is arranged between the lower part of the outer part (2) and the bottom of the gully (17).

10. Holder for gully filter according to claim 9, **characterized in that** said support leg is telescopically formed and can be locked in the desired position by means of a screw.

## Patentansprüche

1. Halter (1) für einen Gullyfilter, welcher einen äußeren Teil (2) und einen inneren Teil (3) umfasst, wobei der innere Teil (3) abnehmbar mit dem äußeren Teil (2) verbunden ist und der innere Teil (3) mit einem Filter (12) versehen ist, **dadurch gekennzeichnet, dass** mindestens ein Haltemittel (5) drehbar am äußeren Teil (2) des Halters (1) angeordnet ist, wobei das Haltemittel (5) aus dem äußeren Teil (2) herausragt, um zu erreichen, dass der Halter (1) mit abdichtendem Anschlag gegen einen Teil der Innenwand eines Gullys (17) in seiner Position gehalten wird.

2. Halter für einen Gullyfilter nach Anspruch 1, **dadurch gekennzeichnet, dass** mindestens eines der Haltemittel (5) teleskopisch ausgebildet ist und mit einer Schraube in der gewünschten Position festgestellt werden kann.

3. Halter für einen Gullyfilter nach einem der vorhergehenden Ansprüche, **dadurch gekennzeichnet, dass** mindestens eines der Haltemittel (5) mit Rädern (6) versehen ist.

4. Halter für einen Gullyfilter nach einem der vorhergehenden Ansprüche, **dadurch gekennzeichnet, dass** mindestens eines der Haltemittel (5) mindestens ein Federelement (13) umfasst, welches für eine Anpresskraft gegen den Halter (1) sorgt.

5. Halter für einen Gullyfilter nach einem der vorhergehenden Ansprüche, **dadurch gekennzeichnet, dass** der Halter (1) einen Keil umfasst, welcher so angeordnet ist, dass er zwischen mindestens eines der Haltemittel (5) und die gegenüberliegende Innenseite der Innenwand des Gullys (17) gebracht werden kann, wobei er für die Anpresskraft gegen den Halter (1) sorgt.

6. Halter für einen Gullyfilter nach einem der vorhergehenden Ansprüche, **dadurch gekennzeichnet, dass** er mindestens zwei Haltemittel (5) umfasst, welche in vertikaler Richtung einen Abstand voneinander aufweisen.

7. Halter für einen Gullyfilter nach einem der vorhergehenden Ansprüche, **dadurch gekennzeichnet, dass** der äußere Teil (2) Führungen (7) für eine lösbare Verbindung des inneren Teils (3) mit dem äußeren Teil (2) umfasst.

8. Halter für einen Gullyfilter nach einem der vorhergehenden Ansprüche, **dadurch gekennzeichnet, dass** der innere Teil (3) einen Griff (8) umfasst, um ein vollständiges Lösen des inneren Teils (3) von dem äußeren Teil (2) zu ermöglichen, ohne dass der äußere Teil (2) aus dem Gully herausgenommen werden muss.

9. Halter für einen Gullyfilter nach einem der vorhergehenden Ansprüche, **dadurch gekennzeichnet, dass** zwischen dem unteren Teil des äußeren Teils (2) und dem Boden des Gullys (17) ein Stützfuß (14) angeordnet ist.

10. Halter für einen Gullyfilter nach Anspruch 9, **dadurch gekennzeichnet, dass** der Stützfuß (14) teleskopisch ausgebildet ist und mit einer Schraube in der gewünschten Position festgestellt werden kann.

## Revendications

1. Support (1) pour un filtre dans une bouche d'égout, comprenant une partie extérieure (2) et une partie intérieure (3), la partie intérieure (3) étant reliée de manière détachable à la partie extérieure (2) et ladite partie intérieure (3) étant munie d'un filtre (12), **caractérisé en ce qu'**au moins un moyen d'appui (5) est agencé de manière à pouvoir tourner au niveau de la partie extérieure (2) du support (1), lequel moyen d'appui (5) dépasse hors de la partie extérieure (2) de façon à maintenir le support (1) en place en butée étanche contre une partie de la paroi intérieure d'une bouche d'égout(17).

2. Support pour un filtre dans une bouche d'égout selon l'une quelconque des revendications précédentes, **caractérisé en ce que** l'un au moins desdits moyens d'appui (5) présente une forme télescopique et peut être bloqué dans la position voulue à l'aide d'une vis.

3. Support pour un filtre dans une bouche d'égout selon l'une quelconque des revendications précédentes, **caractérisé en ce que** l'un au moins desdits moyens d'appui (5) est muni de roulettes (6).

4. Support pour un filtre dans une bouche d'égout selon l'une quelconque des revendications précédentes, **caractérisé en ce que** l'un au moins desdits moyens d'appui (5) comprend au moins un élément à ressort (13) qui exerce une force de pression contre le support (1).

5. Support pour un filtre dans une bouche d'égout selon l'une quelconque des revendications précédentes, **caractérisé en ce que** le support (1) comprend une cale en coin qui est agencée pour être placée entre l'un au moins desdits moyens d'appui (5) et le côté intérieur opposé de la paroi intérieure de ladite bouche d'égout (17) afin d'exercer ladite force de pression contre le support (1).

6. Support pour un filtre dans une bouche d'égout selon l'une quelconque des revendications précédentes, **caractérisé en ce qu'**il comprend au moins deux moyens d'appui (5) qui sont agencés avec un écartement vertical l'un par rapport à l'autre.

7. Support pour un filtre dans une bouche d'égout selon l'une quelconque des revendications précédentes, **caractérisé en ce que** la partie extérieure (2) comprend des guides (7) pour relier la partie intérieure (3) de manière déplaçable à la partie extérieure (2).

8. Support pour un filtre dans une bouche d'égout selon l'une quelconque des revendications précédentes, **caractérisé en ce que** ladite partie intérieure (3) comprend une poignée (8) permettant de détacher complètement la partie intérieure (3) de la partie extérieure (2) sans qu'il soit nécessaire de sortir la partie extérieure (2) de la bouche d'égout(17).

9. Support pour un filtre dans une bouche d'égout selon l'une quelconque des revendications précédentes, **caractérisé en ce qu'**un pied support (14) est agencé entre le dessous de la partie extérieure (2) et le fond de la bouche d'égout(17).

10. Support pour un filtre dans une bouche d'égout selon la revendication 9, **caractérisé en ce que** ledit pied support (14) a une forme télescopique et peut être bloqué dans la position voulue à l'aide d'une vis.
